# EUROPEAN PATENT APPLICATION

(11) **EP 1 882 436 A1**
(43) Date of publication of application: **30.01.2008**
(21) Application number: 06117837.2
(22) Date of filing: 25.07.2006
(51) Int. Cl.: A47L 15/42, A47L 15/23, F16K 11/085, F16K 37/00

(54) **Dishwasher with a hydraulic circuit having a switch valve**

(71) Applicant: Electrolux Home Products Corporation N.V., 1930 Zaventem (BE)
(72) Inventor: Brambilla, Enrico, 20127 Milano (IT); Alessandrelli, Roberto, 20161 Milano (IT)
(74) Representative: Jorio, Paolo

(57) **Abstract**

A dishwasher (1) having: a wash chamber (3) having a bottom wall (6), a top wall (7), a rear wall (8), and two lateral walls (9); a top spray arm (13) and a bottom spray arm (14) inside the wash chamber (3); a circulation pump (12) for feeding wash fluid to the top spray arm (13) and bottom spray arm (14); and a switch valve (16) fed by the circulation pump (12), and which directs wash fluid to the top spray arm (13) or the bottom spray arm (14). The switch valve (16) is located in the bottom rear part of the wash chamber (3), is connected to the top spray arm (13) by an L-shaped feed pipe (17) having a vertical initial portion fixed to the rear wall (8), and a horizontal end portion, and is connected to the bottom spray arm (14) by a horizontal feed pipe (18) fixed to the bottom wall (6).

## Description

### TECHNICAL FIELD

The present invention relates to a dishwasher.

### BACKGROUND ART

A standard dishwasher, as described for example in EP1543764A2, is normally equipped with a top and bottom dish basket with a top and bottom spray arm supplied by a circulation pump; and a switch valve is interposed between the circulation pump and the spray arms to switch water flow between the top and bottom spray arm.

The switch valves currently used in dishwashers have a large number of gears, and are therefore bulky and expensive. Moreover, controlling the position of the valves is complicated, and the valves themselves produce high pressure losses, and usually only have two operating positions, for feeding the top spray arm or bottom spray arm, but not both spray arms at the same time.

To reduce cost, it has been proposed to use a "ball switch valve", in which a ball is moved between different operating positions, under control of the water flow, to distribute water flow between the two spray arms. In a "ball switch valve", switching is effected with no motor or gears, so that the switch valve is cheap and easy to implement, but on the other hand is unreliable, and switching can be unpredictable.

### DISCLOSURE OF INVENTION

It is an object of the present invention to provide a dishwasher designed to eliminate the aforementioned drawbacks, and which is cheap and easy to implement.

According to the present invention, there is provided a dishwasher as claimed in the accompanying Claims.

### BRIEF DESCRIPTION OF THE DRAWINGS

A non-limiting embodiment of the present invention will be described by way of example with reference to the accompanying drawings, in which:

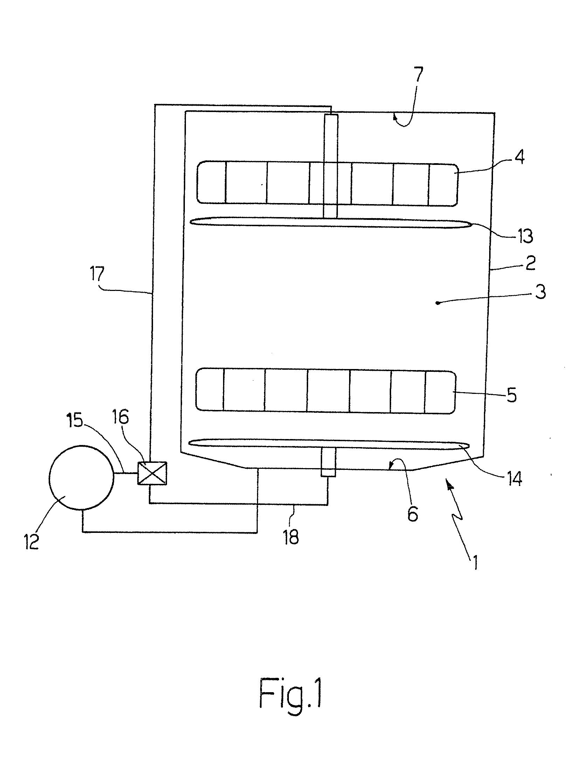

Figure 1 shows a schematic side view of a dishwasher in accordance with the present invention;
Figure 2 shows a schematic view in perspective of a wash chamber of the Figure 1 dishwasher;
Figure 3 shows a schematic view in perspective of a bottom wall of the wash chamber of the Figure 1 dishwasher;
Figure 4 shows a view in perspective of a wash switch valve of the Figure 1 dishwasher;
Figures 5 and 6 show two views in perspective of component parts of the Figure 4 switch valve; and
Figures 7, 8 and 9 show three schematic views of the Figure 4 switch valve in three different operating positions.

### PREFERRED EMBODIMENTS OF THE INVENTION

Number 1 in the attached drawings indicates as a whole a dishwasher comprising a casing 2 resting on a floor on a number of feet. Inside casing 2 is defined a wash chamber 3, in which dirty dishes are loaded into a movable top basket 4 and bottom basket 5, and are washed in a wash cycle in conventional manner.

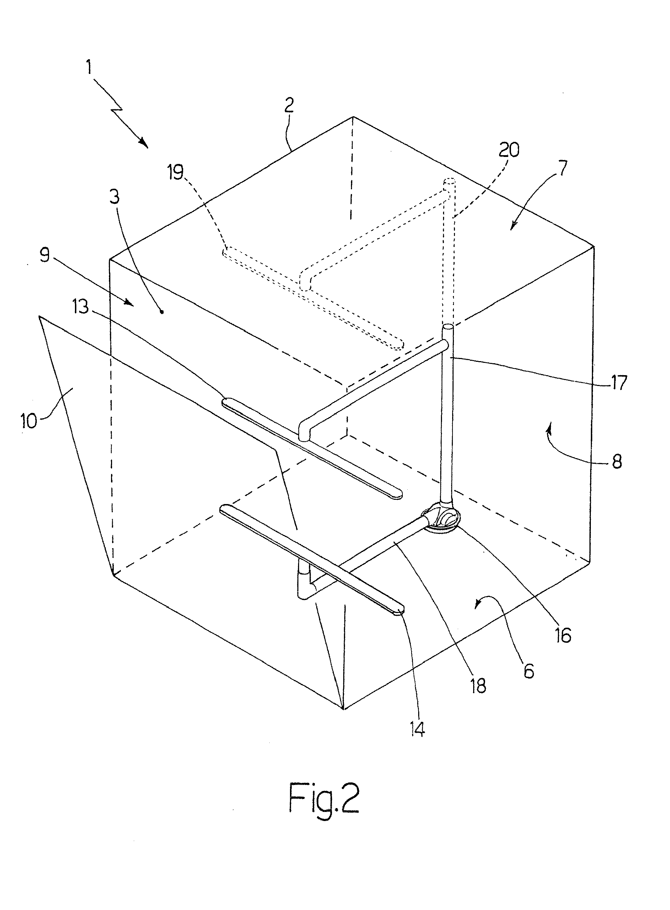

As shown in Figure 2, wash chamber 3 has a horizontal bottom wall 6, a horizontal top wall 7, a vertical rear wall 8, and two vertical lateral walls 9; and casing 2 is fitted with a hinged front door 10 to seal wash chamber 3 during the wash cycle. In connection with the wash cycle, front door 10 preferably has a detergent tray assembly (not shown), into which liquid or particulate detergent is placed by the user and dispensed at predetermined times during the wash cycle. Dispensing detergent in this way is, of course, known, and is only described for the sake of thoroughness.

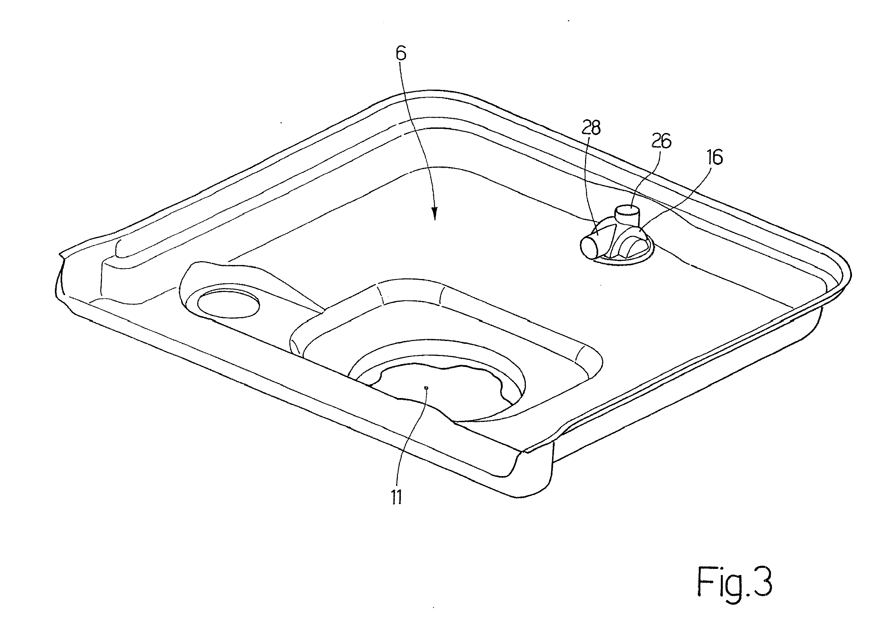

A circulation pump 12 is housed in casing 2 - more specifically, is mounted in a central opening 11 (see Figure 3) formed in bottom wall 6 of wash chamber 3 - to draw wash fluid (water or water and detergent) from central opening 11 of bottom wall 6, and feed the wash fluid to a top spray arm 13 and bottom spray arm 14. More specifically, circulation pump 12 feeds through an intake pipe 15 the wash fluid to a powered three-position switch valve 16, which directs the wash fluid to top spray arm 13 only, to bottom spray arm 14 only, or to both spray arms 13 and 14.

Switch valve 16 is located in the bottom rear part of wash chamber 3, and in particular on bottom wall 6, close to rear wall 8. Switch valve 16 is connected to a central hub of top spray arm 13 by an L-shaped feed pipe 17 having a vertical initial portion fixed to rear wall 8, and a horizontal end portion; and is connected to a central hub of bottom spray arm 14 by a horizontal feed pipe 18 fixed to bottom wall 6. In an alternative embodiment shown by the dash line lines, dishwasher 1 also comprises a third spray arm 19 suspended from top wall 7 and fed by an auxiliary pipe 20 branching off from feed pipe 17.

The particular location of the switch valve has an important advantage: the two feed pipes 17 and 18 are of similar length and have a similar number of bends, so that the hydraulic circuit is intrinsically balanced with no need for constrictions along feed pipe 18 (thus reducing the total resulting resistance of the hydraulic circuit).

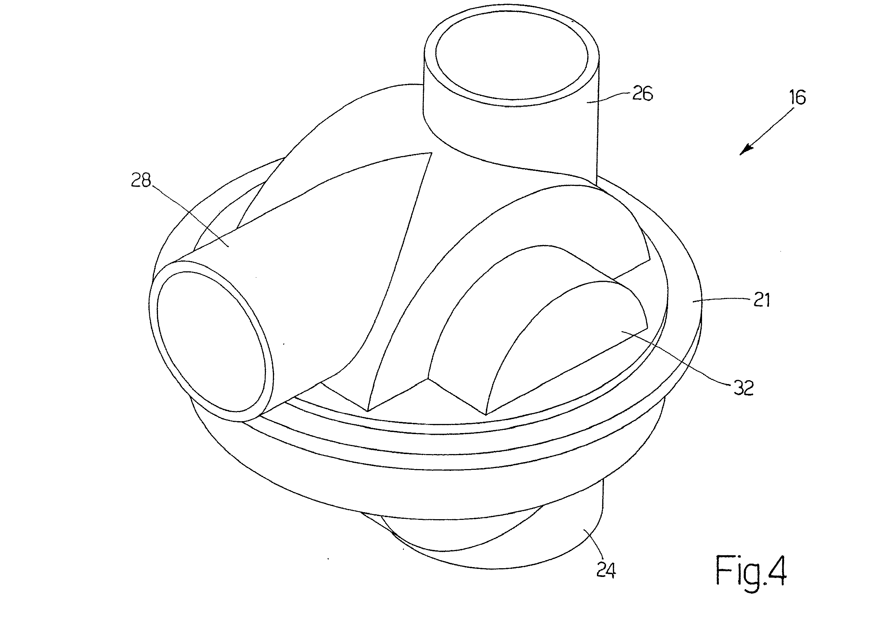

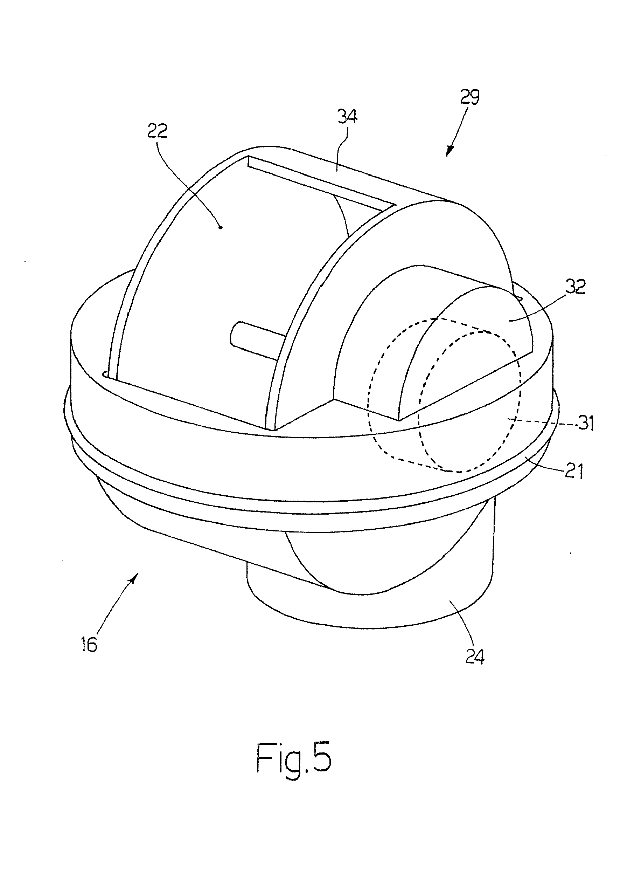

As shown in Figures 4-9, switch valve 16 comprises a valve body 21 defining an inner cylindrical switch chamber 22, through the lateral surface of which are formed an inlet hole 23 connected to an inlet pipe 24; a top outlet hole 25 connected to a top outlet pipe 26; and a bottom outlet hole 27 connected to a bottom outlet pipe 28. Inlet pipe 24 is connected to intake pipe 15 to receive wash fluid from circulation pump 12; top outlet pipe 26 is connected to feed pipe 17 to feed wash fluid to top spray arm 13; and bottom outlet pipe 28 is connected to feed pipe 18 to feed wash fluid to bottom spray arm 14.

Valve body 21 houses a rotating wheel 29, which is housed inside switch chamber 22, is coaxial with switch chamber 22, and is rotated about a rotation axis 30 by an electric motor 31 housed inside a seat 32 located side by side with and sealed in fluidtight manner from switch chamber 22. In a preferred embodiment, wheel 29 comprises a gear 33, which meshes with a gear fixed rigidly to a shaft of electric motor 31; gear 33 is outside the wet area of switch chamber 22, and sealing is effected by an 0-Ring on a shaft of wheel 29. If necessary, electric motor 31 may incorporate an epicyclical transmission to improve the drive torque rotating wheel 29.

In a preferred embodiment, the rotation axis 30 is horizontal, inlet pipe 24 is vertical, top outlet pipe 26 is vertical and substantially coaxial with inlet pipe 24, and bottom outlet pipe 28 is horizontal.

Wheel 29 supports a circular shutter 34 perpendicular to wheel 29 and located on the outer edge of wheel 29. Shutter 34 is larger than outlet holes 25 and 27, so as to completely close outlet hole 25 or 27 when positioned over it. In a preferred embodiment, inlet hole 23 and bottom outlet hole 27 are so spaced apart as to leave enough room, between inlet hole 23 and bottom outlet hole 27, to house shutter 34 without interfering with inlet hole 23 and bottom outlet hole 27.

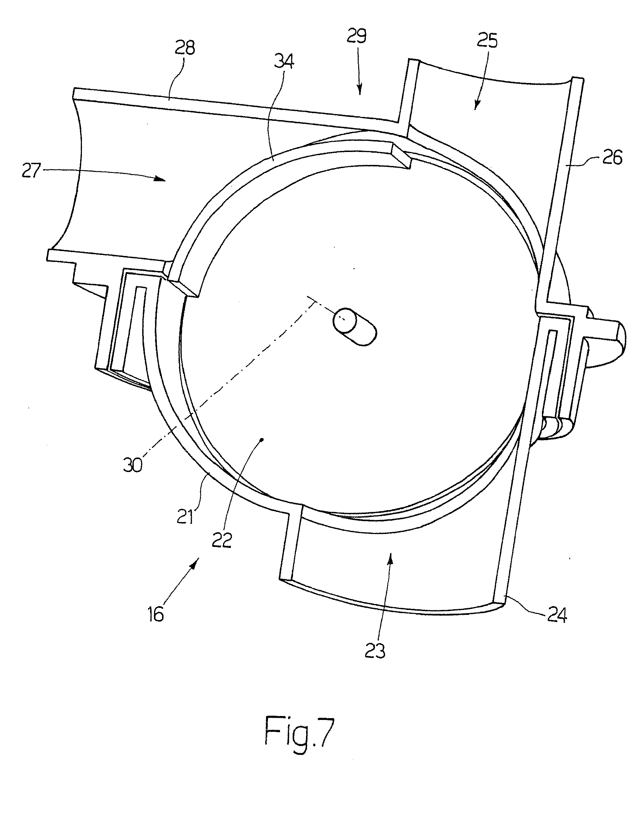

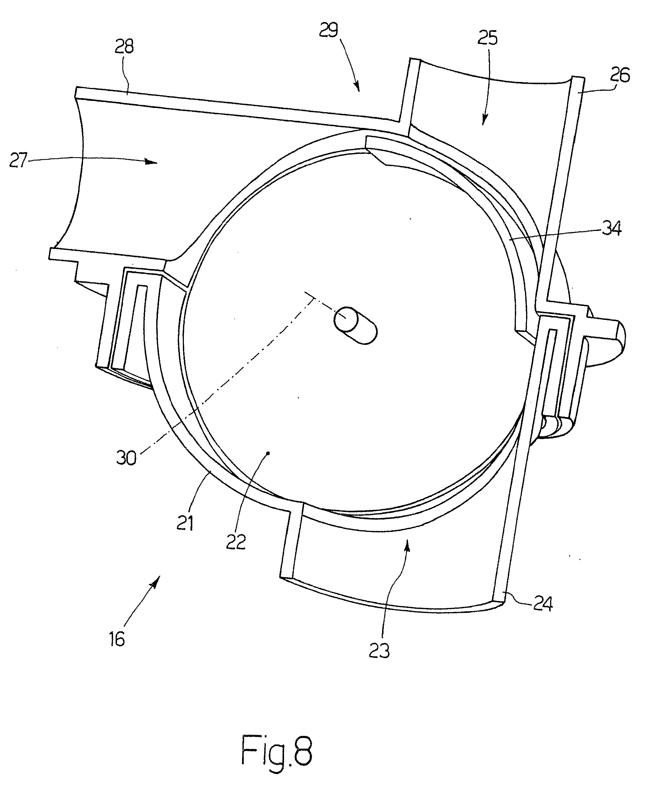

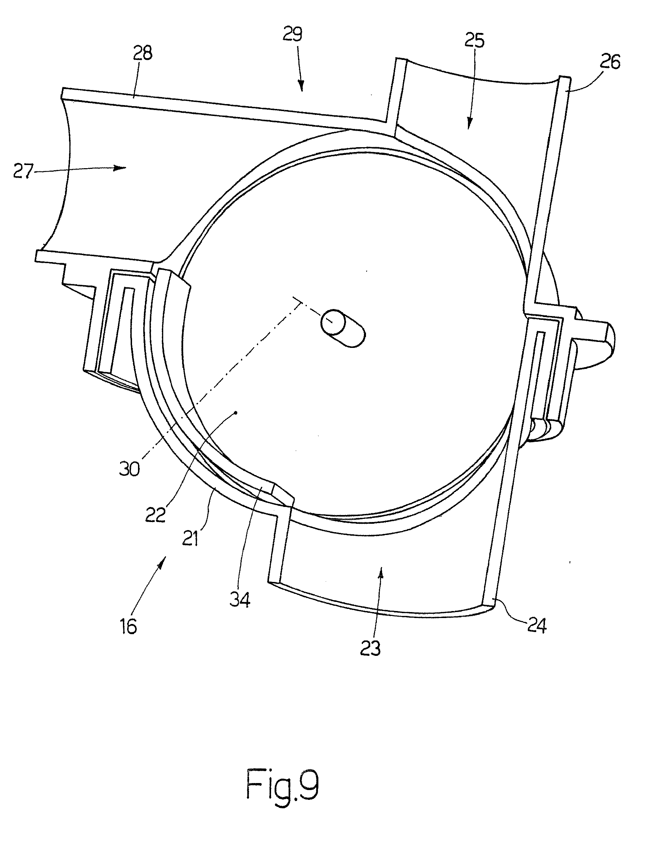

As shown more clearly in Figures 7, 8 and 9, wheel 29 can be set to three different positions: shutter 34 positioned over outlet hole 27 (Figure 7) to feed wash fluid through outlet hole 25 only; shutter 34 positioned over outlet hole 25 (Figure 8) to feed wash fluid through outlet hole 27 only; and shutter 34 positioned between outlet hole 27 and inlet hole 23 (Figure 9) to feed wash fluid through both outlet holes 25 and 27 at the same time.

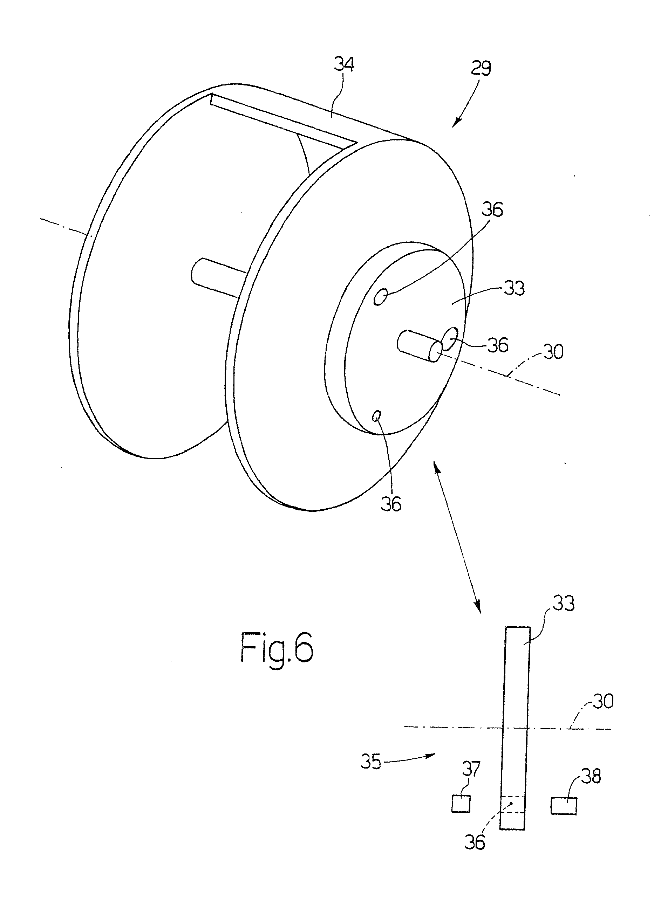

In a preferred embodiment shown schematically in Figure 6, switch valve 16 comprises an angular encoder 35 for determining the angular position of wheel 29 (and therefore of shutter 34). Angular encoder 35 is connected to a control unit (not shown) which drives electric motor 31, and which uses the position signal from angular encoder 35 to determine operation of electric motor 31 and/or to feedback control electric motor 31.

Angular encoder 35 uses gear 33 as an encoding wheel, and comprises a number of marking slots 36 formed through gear 33 and arranged along the same circumference; and a light emitter 37 (e.g. a light diode) and a light receiver 38, arranged facing each other on opposite sides of gear 33 and aligned with marking slots 36. Marking slots 36 are of different sizes to let different amounts of light through, so that, by determining the amount of light through a marking slot 36 aligned with light emitter 37 and light receiver 38, it is possible to determine exactly which marking slot 36 is aligned with light emitter 37 and light receiver 38. Angular encoder 35 preferably has three marking slots 36, each indicating one of the above three positions of switch valve 16.

By detecting each of the three positions of switch valve 16, angular encoder 35 is able to determine the current position of switch valve 16 at all times, with no need to move wheel 29 to a predetermined zero position before commencing control of switch valve 16.

Switch valve 16 as described above has numerous advantages, by being easy to implement and highly effective and efficient. In particular, switch valve 16 is compact, easy to control, and minimizes pressure losses. Furthermore, the location of switch valve 16 in the hydraulic circuit reduces pressure losses, by virtue of the top and bottom branches of the hydraulic circuit being of similar length and having a small number of bends, thus reducing both energy and water consumption as compared with known standard dishwashers.

## Claims

1. A dishwasher (1) comprising:
a wash chamber (3) having a bottom wall (6), a top wall (7), a rear wall (8), and two lateral walls (9);
a top spray arm (13) and a bottom spray arm (14) inside the wash chamber (3);
a circulation pump (12) for feeding wash fluid to the top spray arm (13) and bottom spray arm (14);
a switch valve (16) fed by the circulation pump (12), and which directs wash fluid to the top spray arm (13) or bottom spray arm (14);
the dishwasher (1) **being characterized in that**:
the switch valve (16) is located in the bottom rear part of the wash chamber (3);
the switch valve (16) is connected to the top spray arm (13) by an L-shaped feed pipe (17) having a vertical initial portion fixed to the rear wall (8), and a horizontal end portion; and
the switch valve (16) is connected to the bottom spray arm (14) by a horizontal feed pipe (18) fixed to the bottom wall (6).

2. A dishwasher (1) as claimed in Claim 1, wherein the switch valve (16) is located on the bottom wall (6), close to the rear wall (8).

3. A dishwasher (1) as claimed in Claim 1 or 2, wherein the switch valve (16) has three operating positions, and directs wash fluid to the top spray arm (13) only, to the bottom spray arm (14) only, or to both the spray arms (13, 14).

4. A dishwasher (1) as claimed in Claim 3, wherein the switch valve (16) comprises a valve body (21) defining an inner cylindrical switch chamber (22); and through the lateral surface of the switch chamber (22) are formed an inlet hole (23) connected to an inlet pipe (24), a top outlet hole (25) connected to a top outlet pipe (26), and a bottom outlet hole (27) connected to a bottom outlet pipe (28).

5. A dishwasher (1) as claimed in Claim 4, wherein the inlet pipe (24) is vertical, the top outlet pipe (26) is vertical and substantially coaxial with the inlet pipe (24), and the bottom outlet pipe (28) is horizontal.

6. A dishwasher (1) as claimed in Claim 4 or 5, wherein the inlet pipe (24) is connected to an intake pipe (15) to receive wash fluid from the circulation pump (12); the top outlet pipe (26) is connected to the feed pipe (17) of the top spray arm (13) to feed wash fluid to the top spray arm (13); and the bottom outlet pipe (28) is connected to the feed pipe (18) of the bottom spray arm (14) to feed wash fluid to the bottom spray arm (14).

7. A dishwasher (1) as claimed in Claim 4, 5 or 6, wherein the switch valve (16) comprises:
a rotating wheel (29), which is housed inside the switch chamber (22), is coaxial with the switch chamber (22), rotates about a rotation axis (30), and supports a shutter (34); and
an electric motor (31) for rotating the wheel (29) about the rotation axis (30).

8. A dishwasher (1) as claimed in Claim 7, wherein the shutter (34) is circular, is perpendicular to the wheel (29), is located on the outer edge of the wheel (29), and is larger than the outlet holes (25, 27), so as to completely close an outlet hole (25; 27) when positioned over the outlet hole (25; 27).

9. A dishwasher (1) as claimed in Claim 8, wherein the inlet hole (23) and the bottom outlet hole (27) are so spaced apart as to leave enough room, between the inlet hole (23) and the bottom outlet hole (27), to house the shutter (34) without interfering with the inlet hole (23) and the bottom outlet hole (27).

10. A dishwasher (1) as claimed in Claim 7, 8 or 9, wherein the electric motor (31) is housed inside a seat (32) located side by side with the switch chamber (22) and sealed in fluidtight manner from the switch chamber (22).

11. A dishwasher (1) as claimed in any of Claims 7 to 10, wherein the electric motor (31) incorporates an epicyclic transmission.

12. A dishwasher (1) as claimed in any of Claims 7 to 11, wherein the wheel (29) is connected rigidly to a first gear (33).

13. A dishwasher (1) as claimed in Claim 12, wherein the first gear (33) meshes with a second gear fixed rigidly to a shaft of the electric motor (31).

14. A dishwasher (1) as claimed in Claim 12 or 13, wherein the first gear (33) is outside the wet area of the switch chamber (22), and sealing is effected by an 0-Ring on a shaft of the wheel (29).

15. A dishwasher (1) as claimed in Claim 12, 13 or 14, wherein the switch valve (16) comprises an angular encoder (35) for determining the angular position of the wheel (29) ; and the angular encoder (35) uses the first gear (33) as an encoding wheel.

16. A dishwasher (1) as claimed in Claim 15, wherein the angular encoder (35) comprises:
a number of marking slots (36) formed through the first gear (33) and located along the same circumference; and
a light emitter (37) and a light receiver (38) arranged facing each other on opposite sides of the first gear (33) and aligned with the marking slots (36).

17. A dishwasher (1) as claimed in Claim 16, wherein the marking slots (36) are of different sizes to let different amounts of light through; by determining the amount of light through a marking slot (36) aligned with the light emitter (37) and the light receiver (38), it is possible to determine exactly which marking slot (36) is aligned with the light emitter (37) and the light receiver (38).

18. A dishwasher (1) as claimed in Claim 16 or 17, wherein the angular encoder (35) has three marking slots (36), each indicating one of the three positions of the switch valve (16).

19. A dishwasher (1) as claimed in any of Claims 1 to 18, wherein the circulation pump (12) is mounted inside a central opening (11) in the bottom wall (6) of the wash chamber (3), and draws wash fluid from the central opening (11) in the bottom wall (6).

20. A dishwasher (1) as claimed in any of Claims 1 to 19 and comprising a third spray arm (19) suspended from the top wall (7) and fed by an auxiliary pipe (20) branching from the feed pipe (17) of the top spray arm (13) .

21. A dishwasher (1) comprising:
a wash chamber (3) having a bottom wall (6), a top wall (7), a rear wall (8), and two lateral walls (9);
a top spray arm (13) and a bottom spray arm (14) inside the wash chamber (3);
a circulation pump (12) for feeding wash fluid to the top spray arm (13) and the bottom spray arm (14);
a switch valve (16) fed by the circulation pump (12), and which directs wash fluid to the top spray arm (13) or bottom spray arm (14), and comprises a rotating wheel (29) connected rigidly to a gear (33), and an angular encoder (35) for determining the angular position of the wheel (29);
the dishwasher (1) **being characterized in that** the angular encoder (35) uses the first gear (33) as an encoding wheel, and comprises:
a number of marking slots (36) formed through the first gear (33) and located along the same circumference; and
a light emitter (37) and a light receiver (38) arranged facing each other on opposite sides of the first gear (33) and aligned with the marking slots (36).

22. A dishwasher (1) as claimed in Claim 21, wherein the marking slots (36) are of different sizes to let different amounts of light through; by determining the amount of light through a marking slot (36) aligned with the light emitter (37) and the light receiver (38), it is possible to determine exactly which marking slot (36) is aligned with the light emitter (37) and the light receiver (38).

23. A dishwasher (1) as claimed in Claim 16 or 17, wherein the switch valve (16) has three operating positions, and directs wash fluid to the top spray arm (13) only, to the bottom spray arm (14) only, or to both the spray arms (13, 14); and the angular encoder (35) has three marking slots (36), each indicating one of the three positions of the switch valve (16).

24. A dishwasher (1) as claimed in Claim 23, wherein the switch valve (16) comprises a valve body (21) defining an inner cylindrical switch chamber (22); through the lateral surface of the switch chamber (22) are formed an inlet hole (23) connected to an inlet pipe (24), a top outlet hole (25) connected to a top outlet pipe (26), and a bottom outlet hole (27) connected to a bottom outlet pipe (28).

25. A dishwasher (1) as claimed in Claim 24, wherein the switch valve (16) comprises:
a rotating wheel (29), which is housed inside the switch chamber (22), is coaxial with the switch chamber (22), rotates about a rotation axis (30), and supports a shutter (34); and
an electric motor (31) for rotating the wheel (29) about the rotation axis (30).

26. A dishwasher (1) as claimed in Claim 25, wherein the shutter (34) is circular, is perpendicular to the wheel (29), is located on the outer edge of the wheel (29), and is larger than the outlet holes (25, 27), so as to completely close an outlet hole (25; 27) when positioned over the outlet hole (25; 27).

27. A dishwasher (1) as claimed in Claim 26, wherein the inlet hole (23) and the bottom outlet hole (27) are so spaced apart as to leave enough room, between the inlet hole (23) and the bottom outlet hole (27), to house the shutter (34) without interfering with the inlet hole (23) and the bottom outlet hole (27).

28. A dishwasher (1) as claimed in Claim 25, 26 or 27, wherein the electric motor (31) is housed inside a seat (32) located side by side with the switch chamber (22) and sealed in fluidtight manner from the switch chamber (22).

29. A switch valve (16) for a dishwasher (1) having a top spray arm (13), a bottom spray arm (14) and a circulation pump (12) for feeding wash fluid to the top spray arm (13) and the bottom spray arm (14); the switch valve (16) is fed by the circulation pump (12), directs wash fluid to the top spray arm (13) or bottom spray arm (14), and comprises a rotating wheel (29) connected rigidly to a gear (33), and an angular encoder (35) for determining the angular position of the wheel (29);
the switch valve (16) **being characterized in that** the angular encoder (35) uses the first gear (33) as an encoding wheel, and comprises:
a number of marking slots (36) formed through the first gear (33) and located along the same circumference; and
a light emitter (37) and a light receiver (38) arranged facing each other on opposite sides of the first gear (33) and aligned with the marking slots (36).

30. A switch valve (16) as claimed in Claim 29, wherein the marking slots (36) are of different sizes to let different amounts of light through; by determining the amount of light through a marking slot (36) aligned with the light emitter (37) and the light receiver (38), it is possible to determine exactly which marking slot (36) is aligned with the light emitter (37) and the light receiver (38).

31. A switch valve (16) as claimed in Claim 29 or 30, wherein the switch valve (16) has three operating positions, and directs wash fluid to the top spray arm (13) only, to the bottom spray arm (14) only, or to both the spray arms (13, 14); and the angular encoder (35) has three marking slots (36), each indicating one of the three positions of the switch valve (16).

32. A switch valve (16) as claimed in Claim 31, wherein the switch valve (16) comprises a valve body (21) defining an inner cylindrical switch chamber (22); through the lateral surface of the switch chamber (22) are formed an inlet hole (23) connected to an inlet pipe (24), a top outlet hole (25) connected to a top outlet pipe (26), and a bottom outlet hole (27) connected to a bottom outlet pipe (28).

33. A switch valve (16) as claimed in Claim 32, wherein the switch valve (16) comprises:
a rotating wheel (29), which is housed inside the switch chamber (22), is coaxial with the switch chamber (22), rotates about a rotation axis (30), and supports a shutter (34); and
an electric motor (31) for rotating the wheel (29) about the rotation axis (30).

34. A switch valve (16) as claimed in Claim 33, wherein the shutter (34) is circular, is perpendicular to the wheel (29), is located on the outer edge of the wheel (29), and is larger than the outlet holes (25, 27), so as to completely close an outlet hole (25; 27) when positioned over the outlet hole (25; 27).

35. A switch valve (16) as claimed in Claim 34, wherein the inlet hole (23) and the bottom outlet hole (27) are so spaced apart as to leave enough room, between the inlet hole (23) and the bottom outlet hole (27), to house the shutter (34) without interfering with the inlet hole (23) and the bottom outlet hole (27).

36. A switch valve (16) as claimed in Claim 33, 34 or 35, wherein the electric motor (31) is housed inside a seat (32) located side by side with the switch chamber (22) and sealed in fluidtight manner from the switch chamber (22).
